# EUROPÄISCHE PATENTSCHRIFT

(11) **EP 3 438 450 B1**
(45) Veröffentlichungstag und Bekanntmachung des Hinweises auf die Patenterteilung: **20.11.2019**
(21) Anmeldenummer: 17184922.7
(22) Anmeldetag: 04.08.2017
(51) Int. Cl.: F03D 80/80, F03D 80/50, F03D 80/00

(54) **PLATTFORM FÜR WARTUNGSARBEITEN AN EINER WINDENERGIEANLAGE, VERFAHREN ZUR MONTAGE EINER SOLCHEN PLATTFORM UND WINDENERGIEANLAGE**
PLATFORM TO CARRY OUT MAINTENANCE OPERATIONS ON A WIND TURBINE, METHOD OF ASSEMBLING SUCH A PLATFORM AND WIND TURBINE
PLATE-FORME DE TRAVAUX D'ENTRETIEN SUR UNE ÉOLIENNE, PROCÉDÉ DE MONTAGE D'UNE TELLE PLATE-FORME ET ÉOLIENNE

(43) Veröffentlichungstag der Anmeldung: 06.02.2019
(73) Patentinhaber: Nordex Energy GmbH, 22419 Hamburg (DE)
(72) Erfinder: Brüdigam, Dirk, 18057 Ziesendorf (DE); Jonuschies, Dr.-Ing. Ingo, 18059 Rostock (DE)
(74) Vertreter: Garrels, Sabine

(56) Entgegenhaltungen:
- DE-A1-102007 003 000
- US-A1- 2015 354 233

## Beschreibung

Die Erfindung bezieht sich auf eine Plattform für Wartungsarbeiten an einer Windenergieanlage. Die Plattform ermöglicht Service- und Reparaturarbeiten außerhalb einer Nabe der Windenergieanlage. Die Erfindung bezieht sich auch auf ein Verfahren zur Montage einer solchen Plattform.

Eine Windenergieanlage besteht üblicherweise aus einem Turm und einer um die Längsachse des Turms drehbar auf dem Turmkopf gelagerten Gondel. Die Gondel trägt den Rotor mit einer Rotornabe und mindestens einem Rotorblatt sowie einen Generator, der die von dem Rotor aus dem Wind entnommene Energie in elektrische Energie umwandelt.

Die einzelnen Teile der Windenergieanlage müssen vom Servicepersonal regelmäßig kontrolliert und gewartet werden. Dazu ist es notwendig, dass das Servicepersonal teilweise auch außerhalb der Windenergieanlage, z.B. an der Nabe arbeiten muss. Für diese Arbeiten wird beispielsweise ein Seilteam von der Nabe abgeseilt. Diese Arbeiten sind mit einem erhöhten Risiko für das Servicepersonal verbunden. Außerdem sind immer mehrere Personen notwendig, die die Sicherung des Seilteams übernehmen müssen.

Eine andere Möglichkeit besteht darin, temporäre Plattformen von außen an der Windenergieanlage zu positionieren. Es gibt beispielsweise Lösungen, die den Bordkran nutzen und eine Plattform auf die entsprechende Höhe an der Windenergieanlage herunterlassen.

Ein weiterer Stand der Technik wird in der Patentschrift EP 2698529 B1 offenbart. Hier wird eine Wartungsplattform beschrieben, die an einer stationären Montagefläche lösbar montiert ist. An einer Montageflächesind ein oder mehrere Plattformen lösbar montiert in der Art, dass das Servicepersonal aus dem Innern der Rotornabe auf diese Plattformen nach außen treten kann. Ein weiteres Beispiel einer Wartungsplattform, die jedoch zu Wartungsarbeiten an einem Rotorblatt dient, ist aus DE102007003000A1 bekannt.

### Darstellung der Erfindung

Aufgabe der Erfindung ist es, eine temporäre Wartungsplattform für Wartungsarbeiten an der Rotornabe einer Windenergieanlage zur Verfügung zu stellen.

Die Aufgabe wird gelöst durch eine erfindungsgemäße Plattform für Wartungsarbeiten als modulare und temporäre Wartungsplattform an einer Windenergieanlage. Die Windenergieanlage besteht aus einem Turm, einer Gondel mit einem Rotor und einer Rotornabe. Die Wartungsplattform umfasst einen Grundrahmen mit mehreren Trittblechen und einer stationären Haltekonstruktion, wobei die Wartungsplattform auf der Haltekonstruktion drehbar gelagert ist.

Die Haltekonstruktion weist erfindungsgemäß drei Ausleger auf, welche an einem Ende miteinander verbunden und symmetrisch mit jeweils einem Winkel von 120° zueinander angeordnet sind. Die Haltekonstruktion wird mittig vor der Rotornabe lösbar montiert. Die Haltekonstruktion hat im Verbindungspunkt der Ausleger, welcher den Mittelpunkt der Haltekonstruktion darstellt, eine Drehwelle angeordnet, auf welcher der Grundrahmen drehbar gelagert ist. Der Grundrahmen ist mit einem Basisträger über mehrere Stützen verbunden, wobei der Basisträger an zwei nebeneinanderliegenden Handgriffen einer Serviceluke der Rotornabe lösbar befestigt ist. Der Grundrahmen ist ebenfalls mit zwei sich gegenüber liegenden Handgriffen der Serviceluke lösbar verbunden.

Das erfindungsgemäße Verfahren zur Montage einer Plattform für Wartungsarbeiten als modulare und temporäre Wartungsplattform an einer Windenergieanlage, welche aus einem Turm, einer Gondel mit einem Rotor und einer Rotornabe besteht, wobei die Wartungsplattform einen Grundrahmen mit mehreren Trittblechen und eine stationäre Haltekonstruktion umfasst, erfolgt mit den Schritten
a) Positionieren der Rotornabe in Y-Stellung und Arretieren des Rotors,
b) Abseilen eines vormontierten Basisträgers mit Stützen von der Rotornabe auf Höhe einer Unterkante einer Serviceluke der Rotornabe und Montage des Basisträgers an zwei nebeneinander liegenden Handgriffen der Serviceluke. Die Montage erfolgt mit Hilfe von Verbindungsmitteln, beispielsweise mittels Schnellspannschellen.
c) Abseilen und Positionieren einer vormontierten Haltekonstruktion von der Rotornabe mittig vor die Serviceluke und Montage der Haltekonstruktion an den Handgriffen der Serviceluke mit Hilfe von Verbindungsmitteln.
d) Abseilen des Grundrahmens von der Rotornabe zur Serviceluke und Positionieren und Arretieren des Grundrahmens auf einer Drehwelle der Haltekonstruktion. Anschließend erfolgt die Montage des Grundrahmens an zwei, sich gegenüber liegenden Handgriffen der Serviceluke mittels Verbindungsmitteln.
e) Montage der Stützen des Basisträgers an einer der Serviceluke gegenüber liegenden Längsseite des Grundrahmens.
f) Einfügen und Befestigen von vormontierten Trittblechen in den Grundrahmen und Schließen einer mit einer der beiden Trittbleche verbundenen, beweglichen Luke zum Schließen einer Lücke zwischen den beiden Trittblechen.

Die Verfahrensschritte Montage der Wartungsplattform, insbesondere die Schritte b) und c) können auch in umgekehrter Reihenfolge durchgeführt werden. Außerdem ist es möglich, den Grundrahmen mit dem bereits an dem Grundrahmen montierten Basisträger abzuseilen und auf die Drehwelle der Haltekonstruktion aufzuschieben und mittels der Wellenverriegelung zu arretieren. Anschließend erfolgt dann die Montage des Grundrahmens an den zwei, sich gegenüber liegenden Handgriffen der Serviceluke.

In einer weiteren Ausführungsform des Verfahrens erfolgt ein Umsetzen der Wartungsplattform, indem die Rotornabe in 120° oder 240° Y-Stellung gedreht wird, der Grundrahmen von den Handgriffen der Serviceluke demontiert wird, der Basisträger von den Handgriffen demontiert wird und der Grundrahmen mit dem Basisträger auf der Drehwelle gedreht wird und anschließend der Grundrahmen und der Basisträger an den Handgriffen der Serviceluke befestigt wird. Vorstellbar ist auch, dass Grundrahmen und Basisträger voneinander getrennt und nachfolgend wieder verbunden werden.

Eine Demontage der Wartungsplattform erfolgt in umgekehrter Reihenfolge wie die Montage.

Erfindungsgemäß wird außerdem eine Windenergieanlage mit einem Turm, einer Gondel mit einem Rotor und einer Rotornabe geschützt, wobei wenigsten eine temporäre Wartungsplattform vor der Rotornabe lösbar montiert ist und die Wartungsplattform auf einer Haltekonstruktion drehbar gelagert ist.

Vorteilhafter Weise können mit der erfindungsgemäßen Plattform Wartungs- und Reparaturarbeiten von vorne an der Nabe ohne Einsatz eines Seilteams durchgeführt werden. Die Konstruktion wird einmalig vor jedem Einsatz montiert und wird dann anschließend nach jeder Weiterdrehung des Rotors um 120° in die horizontale Lage gedreht und fixiert.

### Ausführung der Erfindung

Die Erfindung wird anhand eines Ausführungsbeispiels näher erläutert. Hierzu zeigen:
- Figur 1: eine Windenergieanlage,
- Figur 2: eine erfindungsgemäße Wartungsplattform vollständig an einer Rotornabe montiert
- Figur 3: eine erfindungsgemäße Wartungsplattform ohne Rotornabe
- Figur 4: Darstellung einer Haltekonstruktion für die Wartungsplattform und
- Figur 5: schematische Darstellung der Wartungsplattform mit Servicepersonal.

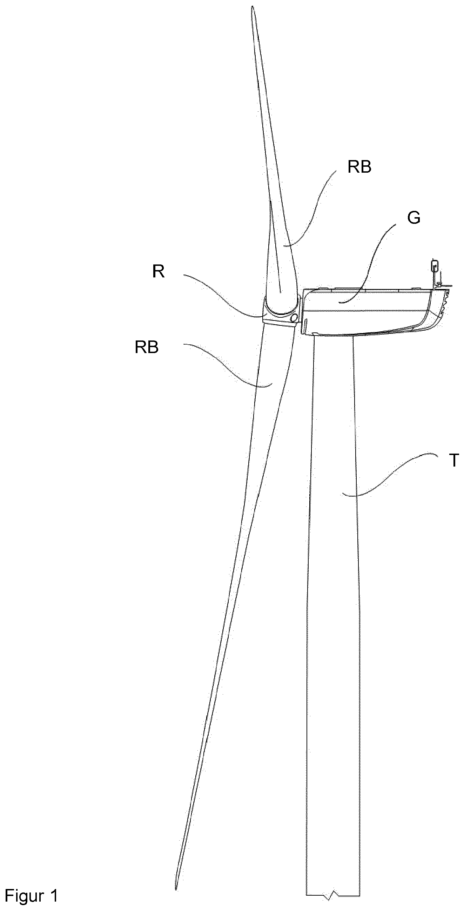

Eine Windenergieanlage, wie in Figur 1 gezeigt, besteht aus einem Turm T, einer Gondel G, welche mit einem Rotor R in Verbindung steht. Der Rotor R hat in der Regel drei Rotorblätter RB und eine Rotornabe RN, welche mit einer nicht gezeigten Pitchdrehverbindung in Verbindung steht.

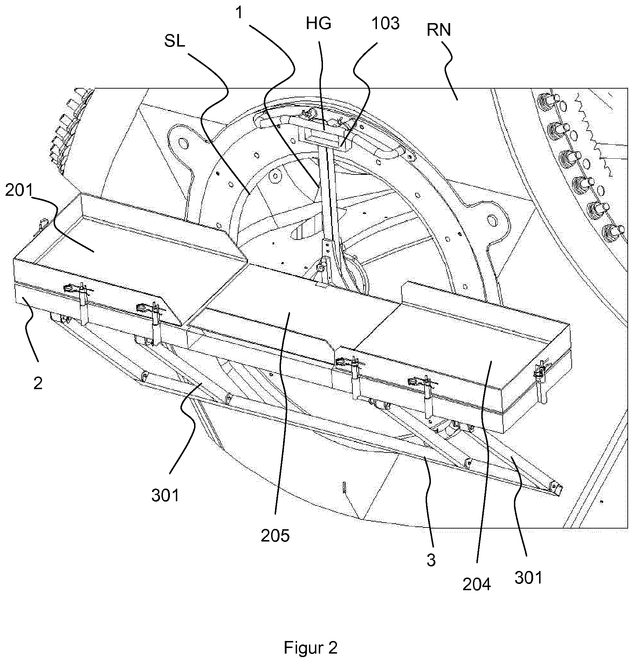

Für temporäre Arbeiten an der Pitchdrehverbindung der Rotornabe RN ist es notwendig, von außen die Rotornabe RN über eine Serviceluke SL erreichen zu können. Die Serviceluke SL hat außen an der Rotornabe RN wenigstens drei um 120° versetzt angeordnete Handgriffe HG. Die erfindungsgemäße Plattform für Wartungsarbeiten (kurz Wartungsplattform WP genannt) wird, vollständig an der Rotornabe RN montiert, wie in Figur 2 gezeigt.

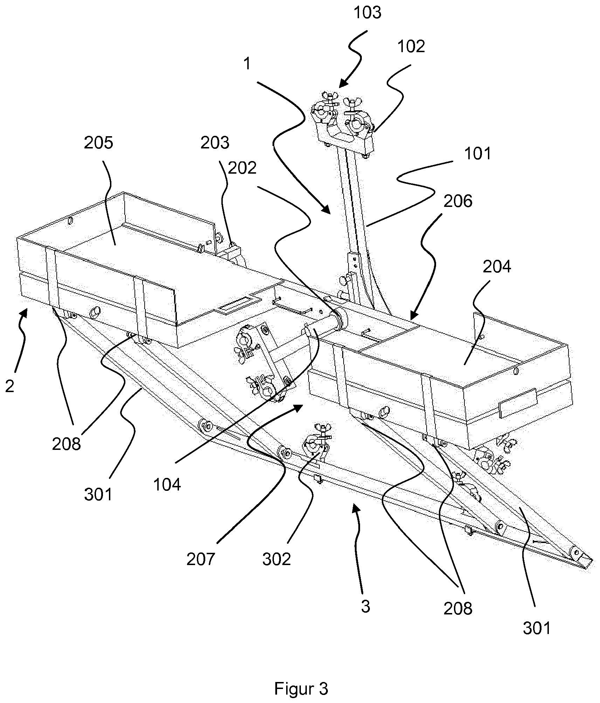

In Figur 3 wird die erfindungsgemäße Wartungsplattform WP ohne Rotornabe RN gezeigt. Die Wartungsplattform WP ist modular aufgebaut und besteht aus einer Haltekonstruktion 1 und einem auf der Haltekonstruktion 1 drehbar gelagerten Grundrahmen 2. Der Grundrahmen 2 ist mit einem linken Trittblech 201, einer Luke 205, einem Drehlager 202, einem rechten Trittblech 204, einem Basisträger 3 und mit vorzugsweise vier Stützen 301 versehen.

Das Drehlager 202 des Grundrahmens 2 ist mittig auf einer Längsseite 206 des Grundrahmens 2 angeordnet. Diese Längsseite 206 mit dem Drehlager 202 zeigt zur Serviceluke SL. Der Grundrahmen 2 ist mit dem mittig liegenden Drehlager 202 auf der Haltekonstruktion 1 drehbar gelagert. Dazu ist eine Drehwelle 104 der Haltekonstruktion 1 im Drehlager 202 des Grundrahmens 2 axial verschiebbar positioniert. Auf der der Serviceluke SL gegenüber liegenden Längsseite 207 des Grundrahmens 2 sind vorzugsweise vier Anbindungspunkte 208 für die Stützen 301 vorgesehen. Der Grundrahmen 2 ist mittels bekannter Verbindungsmittel, in diesem Ausführungsbeispiel mittels Schnellspannschellen Grundrahmen 203, an den zwei nebeneinanderliegenden Handgriffen HG der Serviceluke SL, an denen auch der Basisträger 3 montiert ist, fixiert.

Das linke Trittblech 201 ist auf dem linken Ende des Grundrahmens 2 und parallel zum rechten Trittblech 204, welches sich auf dem rechten Ende des Grundrahmens 2 befindet, angeordnet. Zwischen beiden Trittblechen 201 und 204 ist eine Lücke, wodurch die Montage der Wartungsplattform WP vereinfacht wird. Um diese Lücke für das später arbeitende Servicepersonal zu schließen, ist die Luke 205 vorgesehen. Die Luke 205 ist mit einem der beiden Trittbleche 201 und 204 verbunden. Sie kann beispielsweise in horizontaler Richtung verschoben oder über Scharniere bewegt werden. In dem Ausführungsbeispiel ist die Luke 205 mit dem linken Trittblech 201 verbunden.

Ebenfalls in Figur 3 ist der Basisträger 3 mit den vier Stützen 301 und Verbindungsmitteln, beispielsweise Schnellspannschellen Basisträger 302, zum Montieren des Basisträgers 3 an zwei nebeneinanderliegenden Handgriffen HG der Serviceluke SL, gezeigt. Der Basisträger 3 kann in einem 120° Raster (alle drei Y-Stellungen des Rotors R) positioniert werden. An dem Basisträger 3 sind die vorzugsweise vier Stützen 301 an einem Ende mit Verbindungsmitteln befestigt, wobei das jeweils andere Ende an dem Grundrahmen 2 befestigt ist, so dass der Grundrahmen 2 auf der dem Drehlager 202 gegenüberliegenden Längsseite 207 abgestützt wird.

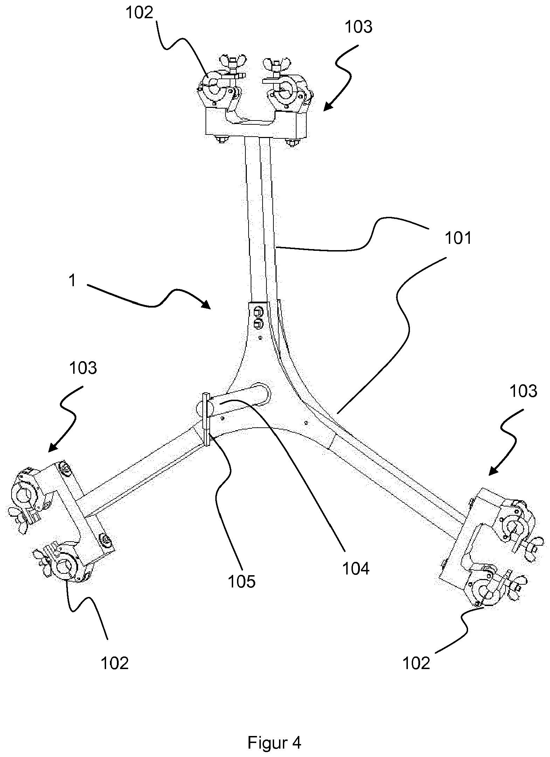

Die Haltekonstruktion 1 (Figur 4) ist eine dreiarmige, symmetrisch aufgeteilte (120°) Sternstrebe mit drei, radial nach außen gerichteten Auslegern 101 und der mittig zwischen den Auslegern 101 angeordneten Drehwelle 104. Die Sternstrebe kann als vorgefertigte Konstruktion ausgeführt sein oder die Ausleger 101 sind ganz oder teilweise vor Ort montierbar ausgeführt. An den äußeren Enden der Ausleger 101 sind Verbindungsmittel vorgesehen, wie beispielsweise Schnellspannschellen Haltekonstruktion 102 mit Schellenverbindern 103, welche eine leichte Verbindung mit den Handgriffen HG der Serviceluke SL ermöglichen. Die Haltekonstruktion 1 wird mittig vor die Rotornabe RN an den Handgriffen HG der Serviceluke SL mit Hilfe der Schnellspannschellen Haltekonstruktion 102 fest, aber lösbar montiert. Am äußeren Ende der Drehwelle 104 befindet sich eine Wellenverriegelung 105, beispielsweise in Form eines klappbaren Riegels. Auf der Drehwelle 104 ist der Grundrahmen 2 drehbar gelagert.

Die Wartungsplattform WP wird temporär für auszuführende Arbeiten montiert. Dazu werden die Basiskomponenten der Wartungsplattform WP auf dem Dach des Maschinenhauses der Gondel G vormontiert. Um alle Schraubverbindungen im Frontbereich der Rotornabe RN zu erreichen, muss die Rotornabe RN in drei Positionen gedreht und die Wartungsplattform WP entsprechend an der Rotornabe RN montiert bzw. umgesetzt werden. Dazu sind die folgenden Arbeitsschritte notwendig.

Die Rotornabe RN befindet sich für die Montage der Wartungsplattform WP in Y-Stellung und der Rotor R ist arretiert.

Der vormontierte Basisträger 3 mit den vier Stützen 301 wird vom Maschinenhausdach auf die Rotornabe RN transportiert und von der Rotornabe RN bis auf eine Höhe der Unterkante der Serviceluke SL abgeseilt. Anschließend wird der Basisträger 3 an den zwei unteren nebeneinander liegenden Handgriffen HG der Serviceluke SL mit Hilfe der Schnellspannschellen Basisträger 302 montiert. Die vormontierte Haltekonstruktion 1 wird vom Maschinenhausdach auf die Rotornabe RN transportiert und von dort zur Serviceluke SL abgeseilt und positioniert. Die Haltekonstruktion 1 wird an allen Handgriffen HG der Serviceluke SL mittels der Schnellspannschellen Haltekonstruktion 102 montiert, so dass die Drehwelle 104 mittig vor der Serviceluke SL positioniert ist. Um den Grundrahmen 2 zu montieren, muss die Wellenverriegelung 105 an der Haltekonstruktion 1 geöffnet sein. Der Grundrahmen 2 wird von der Rotornabe RN zur Serviceluke SL abgeseilt und auf die Drehwelle 104 der Haltekonstruktion 1 geführt. Die Wellenverriegelung 105 wird gesichert. Der Grundrahmen 2 wird an zwei, sich gegenüber liegenden Handgriffen HG der Serviceluke SL mittels der Schnellspannschellen Grundrahmen 203 montiert. Die vorzugsweise vier Stützen 301 des Basisträgers 3 werden mit den Anbindungspunkten 208 an der der Rotornabe RN abgewandten Längsseite 207 des Grundrahmens 2 verbunden. Die Trittbleche 201 und 204 und die vormontierte Luke 205 werden in den Grundrahmen 2 eingefügt und befestigt. Die mit dem linken Trittblech 201 verbundene Luke 205 wird zum rechten Trittblech 204 positioniert und schließt somit die Lücke zwischen den beiden Trittblechen 201 und 204.

Ein Umsetzen der Wartungsplattform WP erfolgt, indem die Rotornabe RN in 120° oder 240° Y-Stellung gedreht wird. Der Grundrahmen 2 und der Basisträger 3 werden voneinander entkoppelt und einzeln von den Handgriffen HG der Serviceluke SL demontiert. Der Grundrahmen 2 wird auf der Drehwelle 104 in die Horizontale gedreht und an den Handgriffen HG der Serviceluke SL befestigt. Der Basisträger 3 wird ebenfalls um 120° oder 240° gedreht und an den Handgriffen HG der Serviceluke SL befestigt. Anschließend werden die Stützen 301 des Basisträgers 3 wieder mit dem Grundrahmen 2 verbunden. Alternativ ist es auch möglich, dass der Grundrahmen 2 und der Basisträger 3 zusammen von den Handgriffen HG der Serviceluke SL gelöst, zusammen um 120° gedreht und anschließend wieder befestigt werden.

Eine Demontage der Wartungsplattform WP erfolgt in ähnlicher Weise in umgekehrter Reihenfolge wie die Montage.

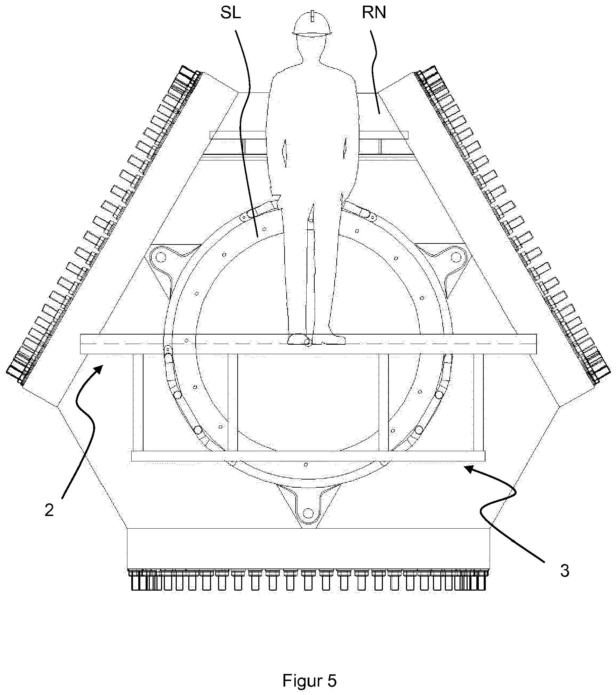

Die Wartungsplattform WP ist durch ihre mittige Anordnung vor der Rotornabe RN in einer optimalen Höhe für das Servicepersonal. Dies wird in einer schematischen Darstellung in Figur 5 gezeigt. Dadurch können Wartungs- und Reparaturarbeiten von vorne an der Nabe ohne Einsatz eines Seilteams durchgeführt werden.

Da es sich bei der vorhergehenden, detailliert beschriebenen Wartungsplattform WP um ein Ausführungsbeispiel handelt, kann es in üblicher Weise vom Fachmann in einem weiten Umfang modifiziert werden, ohne den Bereich der Erfindung zu verlassen. Insbesondere können auch die konkreten Ausgestaltungen der Basiskomponenten der Wartungsplattform WP in anderer Form als in der hier beschriebenen erfolgen. Ebenso können der Grundrahmen 2 und der Basisträger 3 in einer anderen Form ausgestaltet werden, wenn dies aus Platzgründen bzw. designerischen Gründen notwendig ist. Weiter schließt die Verwendung der unbestimmten Artikel "ein" bzw. "eine" nicht aus, dass die betreffenden Merkmale auch mehrfach vorhanden sein können.

### Bezugszeichen

- T: Turm
- G: Gondel
- R: Rotor
- RB: Rotorblätter
- RN: Rotornabe
- SL: Serviceluke
- HG: Handgriffe
- WP: Wartungsplattform

- 1: Haltekonstruktion
101 Ausleger
102 Schnellspannschellen Haltekonstruktion
103 Schellenverbinder
104 Drehwelle
105 Wellenverriegelung
- 2: Grundrahmen
201 linkes Trittblech
202 Drehlager
203 Schnellspannschellen Grundrahmen
204 rechtes Trittblech
205 Luke
206 Längsseite des Grundrahmens 2 zur Serviceluke SL zeigend
207 Längsseite des Grundrahmens 2 der Serviceluke SL gegenüber liegend
208 Anbindungspunkte am Grundrahmen 2 für die Stützen 301
- 3: Basisträger
301 Stützen
302 Schnellspannschellen Basisträger

## Patentansprüche

1. Plattform für Wartungsarbeiten als modulare und temporäre Wartungsplattform (WP) für eine Windenergieanlage, wobei die Wartungsplattform (WP) auf der Haltekonstruktion (1) drehbar gelagert ist, und eine stationäre Haltekonstruktion (1) umfasst, **dadurch gekennzeichnet, dass** die Wartungsplattform (WP) vor einer Rotornabe der Windenergieanlage lösbar anordenbar ist und einen Grundrahmen mit mehreren Trittblechen (201, 204) besitzt.

2. Plattform nach Anspruch 1 **dadurch gekennzeichnet, dass** die Haltekonstruktion (1) drei Ausleger (101) aufweist, welche an einem Ende miteinander verbunden und symmetrisch mit jeweils einem Winkel von 120° zueinander angeordnet sind, und dass die Haltekonstruktion (1) mittig vor der Rotornabe (RN) lösbar montiert ist.

3. Plattform nach Anspruch 1 oder 2 **dadurch gekennzeichnet, dass** die Haltekonstruktion (1) in ihrem Mittelpunkt eine Drehwelle (104) aufweist, auf welcher der Grundrahmen (2) drehbar gelagert ist.

4. Plattform nach Anspruch 1 **dadurch gekennzeichnet, dass** der Grundrahmen (2) mit einem Basisträger (3) über mehrere Stützen (301) verbunden ist, wobei der Basisträger (3) an zwei nebeneinander liegenden Handgriffen (HG) einer Serviceluke (SL) der Rotornabe (RN) lösbar befestigt ist.

5. Plattform nach Anspruch 4 **dadurch gekennzeichnet, dass** der Grundrahmen (2) mit zwei sich gegenüber liegenden Handgriffen (HG) der Serviceluke (SL) lösbar verbunden ist.

6. Verfahren zur Montage einer Plattform für Wartungsarbeiten als modulare und temporäre Wartungsplattform (WP) an einer Windenergieanlage, welche aus einem Turm (T), einer Gondel (G) mit einem Rotor (R) und einer Rotornabe (RN) besteht, wobei die Wartungsplattform (WP) einen Grundrahmen (2) mit mehreren Trittblechen (201, 204) und eine stationäre Haltekonstruktion (1) umfasst, mit den Schritten
a) Positionieren der Rotornabe (RN) in Y-Stellung und Arretieren des Rotors (R),
b) Abseilen eines vormontierten Basisträgers (3) mit Stützen (301) von der Rotornabe (RN) auf Höhe einer Unterkante einer Serviceluke (SL) der Rotornabe (RN) und Montage des Basisträgers (3) an zwei nebeneinander liegenden Handgriffen (HG) der Serviceluke (SL),
c) Abseilen und Positionieren der vormontierten Haltekonstruktion (1) von der Rotornabe (RN) mittig vor die Serviceluke (SL) und Montage der Haltekonstruktion (1) an den Handgriffen (HG) der Serviceluke (SL),
d) Abseilen des Grundrahmens (2) von der Rotornabe (RN) zur Serviceluke (SL), Positionieren und Arretieren des Grundrahmens (2) auf einer Drehwelle (104) der Haltekonstruktion (1) und Montage des Grundrahmens (2) an zwei, sich gegenüber liegenden Handgriffen (HG) der Serviceluke (SL),
e) Montage der Stützen (301) des Basisträgers (3) an einer der Serviceluke (SL) gegenüber liegenden Längsseite (207) des Grundrahmens (2),
f) Einfügen und Befestigen von vormontierten Trittblechen (201, 204) in den Grundrahmen (2) und Schließen einer, mit einer der beiden Trittbleche (201, 204) verbundenen, beweglichen Luke (205) zum Schließen einer Lücke zwischen den beiden Trittblechen (201, 204).

7. Verfahren nach Anspruch 6 **dadurch gekennzeichnet, dass** ein Umsetzen der Wartungsplattform (WP) erfolgt, indem die Rotornabe (RN) in 120° oder 240° Y-Stellung gedreht wird, der Grundrahmen (2) von den Handgriffen (HG) der Serviceluke (SL) demontiert wird, der Basisträger (3) von den Handgriffen (HG) demontiert wird und der Grundrahmen (2) mit dem Basisträger (3) auf der Drehwelle (104) gedreht wird und anschließend der Grundrahmen (2) und der Basisträger (3) an den Handgriffen (HG) der Serviceluke (SL) befestigt wird.

8. Verfahren nach Anspruch 6 **dadurch gekennzeichnet, dass** eine Demontage der Wartungsplattform (WP) in umgekehrter Reihenfolge wie die Montage erfolgt.

9. Windenergieanlage, umfassend einen Turm (T), eine Gondel (G) mit einem Rotor (R) und einer Rotornabe (RN), und umfassend wenigsten eine temporäre Wartungsplattform (WP), wobei die wenigstens eine Wartungsplattform (WP) eine stationäre Haltekonstruktion (1) umfasst, und wobei die Wartungsplattform (WP) auf der Haltekonstruktion (1) drehbar gelagert ist, **dadurch gekennzeichnet, dass** die temporäre Wartungsplattform (WP) vor der Rotornabe (RN) lösbar montiert ist.

## Claims

1. Platform for maintenance operations as a modular and temporary maintenance platform (WP) for a wind turbine, the maintenance platform (WP) being rotatably mounted on the support structure (1) and comprising a stationary support structure (1), **characterized in that** the maintenance platform (WP) can be detachably arranged in front of a rotor hub of the wind turbine and has a base frame with a plurality of tread plates (201, 204).

2. Platform according to Claim 1, **characterized in that** the support structure (1) has three arms (101), which are connected to one another at one end and are each arranged symmetrically at an angle of 120° relative to one another, and **in that** the support structure (1) is detachably mounted centrally in front of the rotor hub (RN).

3. Platform according to Claim 1 or 2, **characterized in that** the support structure (1) has a rotary shaft (104) at its centre, on which the base frame (2) is rotatably mounted.

4. Platform according to Claim 1, **characterized in that** the base frame (2) is connected to a base carrier (3) via multiple supports (301), wherein the base carrier (3) is detachably fixed to two adjacently located handles (HG) of a service hatch (SL) of the rotor hub (RN).

5. Platform according to Claim 4, **characterized in that** the base frame (2) is detachably connected to two opposite handles (HG) of the service hatch (SL) .

6. Method for assembling a platform for maintenance operations as a modular and temporary maintenance platform (WP) on a wind turbine, which comprises a tower (T), a nacelle (G) with a rotor (R) and a rotor hub (RN), the maintenance platform (WP) comprising a base frame (2) with a plurality of tread plates (201, 204) and a stationary support structure (1), comprising the steps:
a) positioning the rotor hub (RN) in the Y position and locking the rotor (R),
b) abseiling a preassembled base carrier (3) having supports (301) from the rotor hub (RN) to the height of a lower edge of a service hatch (SL) of the rotor hub (RN) and mounting the base carrier (3) on two adjacently located handles (HG) of the service hatch (SL),
c) abseiling and positioning the preassembled support structure (1) from the rotor hub (RN) centrally in front of the service hatch (SL) and mounting the support structure (1) on the handles (HG) of the service hatch (SL),
d) abseiling the base frame (2) from the rotor hub (RN) to the service hatch (SL), positioning and locking the base frame (2) on a rotary shaft (104) of the support structure (1) and mounting the base frame (2) on two opposite handles (HG) of the service hatch (SL),
e) mounting the supports (301) of the base carrier (3) on a long side (207) of the base frame (2), located opposite the service hatch (SL),
f) inserting and fixing preassembled tread plates (201, 204) into the base frame (2) and closing a movable hatch (205) connected to one of the two tread plates (201, 204) to close a gap between the two tread plates (201, 204).

7. Method according to Claim 6, **characterized in that** the maintenance platform (WP) is converted by rotating the rotor hub (RN) into the 120° or 240° Y position, the base frame (2) being disassembled from the handles (HG) of the service hatch (SL), the base carrier (3) being disassembled from the handles (HG) and the base frame (2) with the base carrier (3) being rotated on the rotary shaft (104), and then the base frame (2) and the base carrier (3) being fixed to the handles (HG) of the service hatch (SL).

8. Method according to Claim 6, **characterized in that** the disassembly of the maintenance platform (WP) is carried out in the reverse order to the assembly.

9. Wind turbine, comprising a tower (T), a nacelle (G) with a rotor (R) and a rotor hub (RN), and comprising at least one temporary maintenance platform (WP), the at least one maintenance platform (WP) comprising a stationary support structure (1) and the maintenance platform (WP) being rotatably mounted on the support structure (1), **characterized in that** the temporary maintenance platform (WP) is detachably mounted in front of the rotor hub (RN).

## Revendications

1. Plate-forme de travaux d'entretien en tant que plate-forme d'entretien modulaire et temporaire (WP) pour une éolienne, la plate-forme d'entretien (WP) étant supportée de manière rotative sur la construction porteuse (1), et comprenant une construction porteuse stationnaire (1), **caractérisée en ce que** la plate-forme d'entretien (WP) peut être disposée de manière amovible devant un moyeu de rotor de l'éolienne et possède un cadre de base avec plusieurs tôles praticables (201, 204).

2. Plate-forme selon la revendication 1, **caractérisée en ce que** la construction porteuse (1) présente trois bras (101) qui sont reliés les uns aux autres à une extrémité et qui sont disposés les uns par rapport aux autres à chaque fois suivant un angle de 120°, et **en ce que** la construction porteuse (1) est montée de manière amovible au centre devant le moyeu de rotor (RN).

3. Plate-forme selon la revendication 1 ou 2, **caractérisée en ce que** la construction porteuse (1) présente en son centre un arbre rotatif (104) sur lequel le cadre de base (2) est supporté de manière rotative.

4. Plate-forme selon la revendication 1, **caractérisée en ce que** le cadre de base (2) est relié à un support de base (3) par le biais de plusieurs montants (301), le support de base (3) étant fixé de manière amovible à deux poignées (HG), situées l'une à côté de l'autre, d'une trappe de service (SL) du moyeu de rotor (RN).

5. Plate-forme selon la revendication 4, **caractérisée en ce que** le cadre de base (2) est raccordé de manière amovible à deux poignées (HG), opposées l'une à l'autre, de la trappe de service (SL).

6. Procédé de montage d'une plate-forme de travaux d'entretien en tant que plate-forme modulaire et temporaire (WP) au niveau d'une éolienne qui se compose d'une tour (T), d'une nacelle (G) avec un rotor (R) et un moyeu de rotor (RN), la plate-forme d'entretien (WP) comprenant un cadre de base (2) avec plusieurs tôles praticables (201, 204) et une construction porteuse stationnaire (1), comprenant les étapes suivantes :
a) positionnement du moyeu de rotor (RN) dans la position Y et blocage du rotor (R),
b) descente en rappel d'un support de base prémonté (3) avec des montants (301) depuis le moyeu de rotor (RN) jusqu'à la hauteur d'un bord inférieur d'une trappe de service (SL) du moyeu de rotor (RN) et montage du support de base (3) au niveau de deux poignées (HG), situées l'une à côté de l'autre, de la trappe de service (SL),
c) descente en rappel et positionnement de la construction porteuse prémontée (1) depuis le moyeu de rotor (RN) centralement devant la trappe de service (SL) et montage de la construction porteuse (1) au niveau des poignées (HG) de la trappe de service (SL),
d) descente en rappel du cadre de base (2) depuis le moyeu de rotor (RN) jusqu'à la trappe de service (SL), positionnement et blocage du cadre de base (2) sur un arbre rotatif (104) de la construction porteuse (1) et montage du cadre de base (2) au niveau de deux poignées (HG), opposées l'une à l'autre, de la trappe de service (SL),
e) montage des montants (301) du support de base (3) au niveau d'un côté longitudinal (207), opposé à la trappe de service (SL), du cadre de base (2),
f) insertion et fixation de tôles praticables prémontées (201, 204) dans le cadre de base (2) et fermeture d'une trappe mobile (205) raccordée à l'une des deux tôles praticables (201, 204) pour fermer un espace entre les deux tôles praticables (201, 204).

7. Procédé selon la revendication 6, **caractérisé en ce que** l'on repositionne la plate-forme d'entretien (WP) en faisant tourner le moyeu de rotor (RN) dans la position Y de 120° ou de 240°, en démontant le cadre de base (2) des poignées (HG) de la trappe de service (SL), en démontant le support de base (3) des poignées (HG) et en faisant tourner le cadre de base (2) avec le support de base (3) sur l'arbre rotatif (104) puis en fixant le cadre de base (2) et le support de base (3) aux poignées (HG) de la trappe de service (SL) .

8. Procédé selon la revendication 6, **caractérisé en ce que** la plate-forme d'entretien (WP) est démontée en procédant en séquence inverse du montage.

9. Éolienne comprenant une tour (T), une nacelle (G) avec un rotor (R) et un moyeu de rotor (RN), et comprenant au moins une plate-forme d'entretien temporaire (WP), l'au moins une plate-forme d'entretien (WP) comprenant une construction porteuse stationnaire (1), et la plate-forme d'entretien (WP) étant supportée de manière rotative sur la construction porteuse (1), **caractérisée en ce que** la plate-forme d'entretien temporaire (WP) est montée de manière amovible devant le moyeu de rotor (RN).
